(19) Europäisches Patentamt
European Patent Office
Office européen des brevets

(11) Publication number: **0 335 331**
**A1**

(12) **EUROPEAN PATENT APPLICATION**

(21) Application number: **89105461.1**

(51) Int. Cl.[4]: **C07F 9/10 , A61K 31/685**

(22) Date of filing: **28.03.89**

Claims for the following Contracting States: ES + GR

(30) Priority: **28.03.88 IT 1998588**

(43) Date of publication of application: **04.10.89 Bulletin 89/40**

(84) Designated Contracting States: **BE DE ES FR GB GR IT LU NL**

(71) Applicant: **MAGIS FARMACEUTICI S.p.A.**
**Via Cacciamali 34/36/38**
**I-25125 Brescia(IT)**

(72) Inventor: **Puricelli, Laura**
**Via Taramelli, 7**
**I-25100 Brescia(IT)**

(74) Representative: **Gervasi, Gemma**
**NOTARBARTOLO & GERVASI Srl Viale Bianca Maria 33**
**I-20122 Milan(IT)**

(54) **O- (1,2-Di-O-acetyl-glycero-3-phosphoryl)ethanolamine, a process for its preparation and its therapeutic use.**

(57) The di-acetyl derivative of α-glycero-phosphoryl ethanolamine is described.

This di-acetyl derivative is useful therapeutically as an adjuvant in cerebral arteriosclerosis and in the treatment of dyslipemia and hyperlipoproteinemia.

EP 0 335 331 A1

# O-(1,2-DI-O-ACETYL-GLYCERO-3-PHOSPHORYL)ETHANOLAMINE, A PROCESS FOR ITS PREPARATION AND ITS THERAPEUTIC USE

This invention relates to the di-acetyl derivative of α-glycerophosphoryl ethanolamine in its DL, L or D form, a process for its preparation and its therapeutic use.

More particularly, the present invention relates to the compound of the following formula (I)

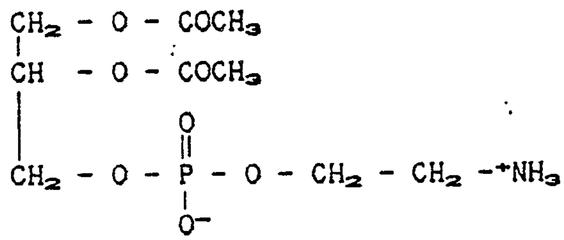

(I)

and its pharmacologically acceptable salts such as the hydrochloride, sulphate and phosphate.

Generally the compound of general formula (I) and its salts have demonstrated interesting hyperlipoproteinemic and dyslipemic activity and have proved useful in cerebral arteriosclerosis.

The preparation process for this compound takes place in accordance with the following scheme:

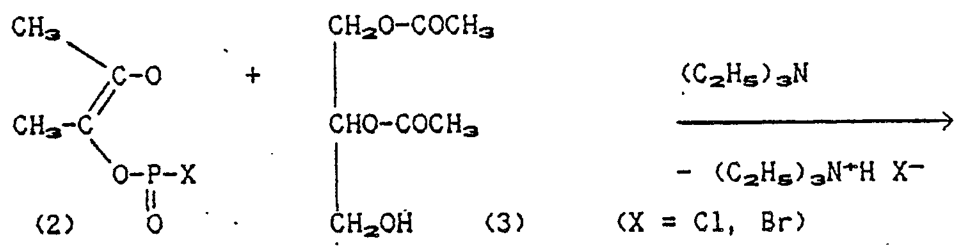


(2) (3) (X = Cl, Br)

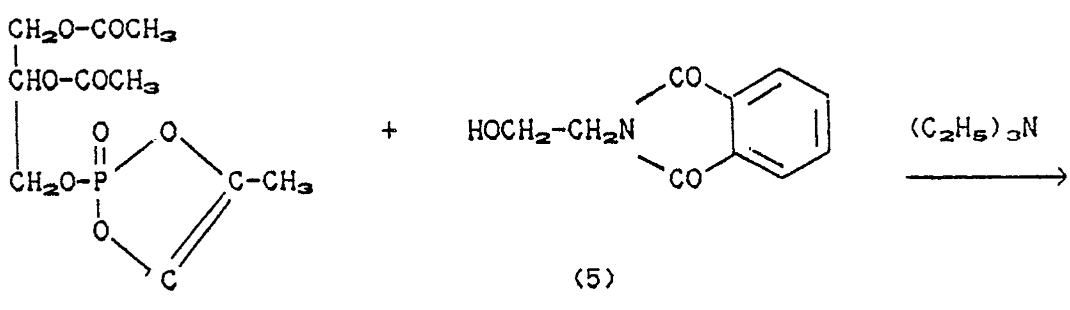


(4) (5)

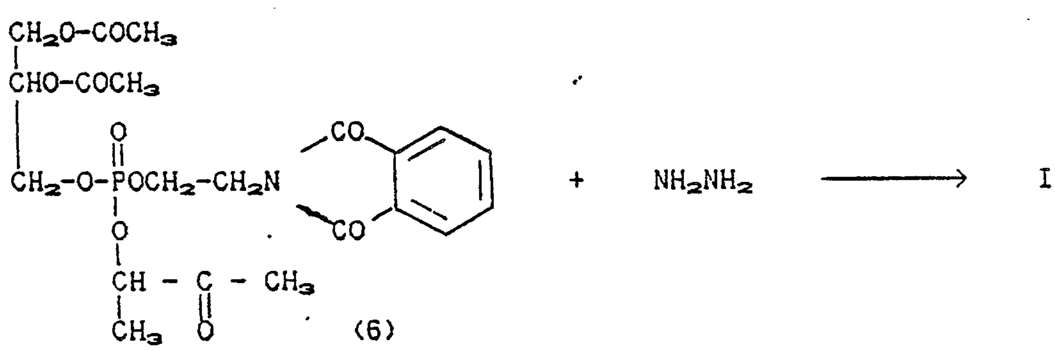


(6)

1,2-di-O-acetyl-glycerol "Diacetin"(3) is reacted in diethyl ether in the presence of triethylamine with 2-chloro-4,5-dimethyl-2-oxo-1,3, -dioxaphosphate (prepared in accordance with F. Ramirez H. Okazaki, J.F. Merecek H. Tsuboi, Synthesis 1976 - 819) for 18 hours at 25° C.

Ethanolamine phthalimide (5) is reacted with the derivative (4) in dichloroethane in the presence of triethylamine

On termination of the reaction the solution is purified through a silica gel column.

The fraction containing derivative (6) is evaporated to dryness and hydrolysed with hydrazine to give (I).

The examples give hereinafter illustrate the invention, but without limiting it.

## EXAMPLE 1

Cyclic (1,2-di-O-acetyl-3-glyceryl) phosphate (4)

A 0° C solution of diacetin (17.61 grams = 0.1 mol) in 4 litres of diethylether is transferred under energetic agitation over a period of 5 minutes into a 0° C solution of ether containing 19 grams of 2-chloro-4,5-dimethyl-2-oxo-1,3, -dioxophosphate (2) and 17 ml of triethylamine. Agitation is maintained for 18 hours at 25° C.

The mixture is filtered to separate the triethylamine hydrochloride and the filtrate evaporated to dryness. About 20 grams of hygroscopic product are obtained.

## EXAMPLE 2

O-(1,2-di-O-acetyl glycero-3-phosphoryl)ethanolamine

A perfectly anhydrous solution of ethanolamine phthalimide (5) (9.1 grams) in dichloroethane (300 ml) is transferred, over a period of three minutes, into a 25° C solution of dichloroethane (150 ml) containing the cyclic phosphate (4) (14.75 grams) and 13.2 ml of triethylamine.

After 5 hours of agitation (25° C), the solution is analysed by T.L.C. (hexane/ethyl ether 1:3). The synthesis is considered complete when the ethanolamine phthalimide spot no longer appears.

The solution is concentrated to a small volume and purified through a silica gel column (500 grams in ether). It is eluted with about 4 litres of ether, and the ether containing the crude diglyceride is evaporated.

100 ml of 95% ethyl alcohol and 2.9 grams of 95% hydrazine hydrate are added to the residue.

The solution is heated for two hours at boiling point, cooled and 5 ml of concentrated hydrochloric acid are added until the solution is acid towards Congo red test paper.

50 ml of ethyl ether are added to the voluminous mass obtained and the mixture is agitated for 90 minutes and filtered.

The filter is washed with two 30 ml portions of ethyl ether.

The ether solution is extracted twice with 50 ml portions of a 25% aqueous solution of sodium chloride.

The ether solution is separated and dried with anhydrous sodium sulphate, and then evaporated to dryness under vacuum at low temperature.

The residue is taken up with the minimum quantity of chloroform and transferred to a silica gel column (700 ml packed with ether).

It is eluted with about 3 litres of ether to eliminate impurities and then eluted with chloroform/methanol (5. 7: 1) (1 litre). The fraction containing the product is identified by T.L.C. (chloroform, methanol, concentrated ammonia 30: 5: 1).

The fraction containing the product is evaporated under vacuum. The product is purified by the following procedure.

The sample is dissolved in 1500 ml of chloroform and the solution transferred into a 65° bath under a stream of dry nitrogen.

About 4 litres of methanol are added slowly to the solution under agitation and the mixture left standing for 14 hours at about 0° C.

The supernatant solvent is decanted and the product separated from the remaining mixture by centrifuge.

The separated solid is dried under high vacuum 0.1 mm overnight at 25° C.

About 7 grams of product are obtained, its structure being confirmed by spectral analysis.

| Elementary analysis | C | H | N | P |
|---|---|---|---|---|
| calculated %<br>found % | 36.24<br>36.3 | 5.747<br>5.8 | 4.697<br>4.7 | 10.385<br>10.29 |

Molecular weight 298.207

The pharmacologically acceptable activity characteristics are indicated hereinafter.

The acute toxicity of the compound of formula (I) was studied on the mouse by the Weil method [Weil C.S. Biometr. 8, 249 (1952)].

The $LD_{50}$ value exceeds 2000 mg/kg.

The effect of the compound in terms of modifying the lipoprotein state and the plasma cholesterol and triglyceride levels, altered by oral administration of olive oil, was studied in normally fed rat treated orally with 15 ml/kg of olive oil at various concentrations.

The greatest effect, appearing two hours after the olive oil treatment and expressed as an increased in triglycerides and cholesterol, with reduction in the $\alpha$-lipoproteins and increase in the $\beta$ and pre-$\beta$ fractions, was well antagonised by the compound, which proved able to return the parameters to normality, with ample attainment of the limits of statistical significance.

## Claims

1. The compound O-(1,2-di-O-acetyl glycero-3-phosphoryl) ethanolamine of formula (I)

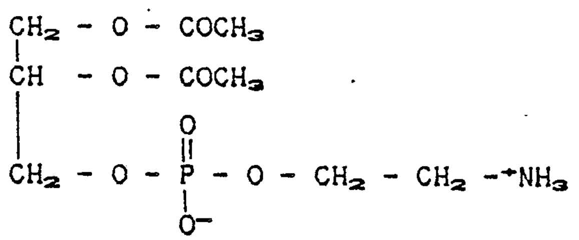

(I)

and its pharmacologically acceptable salts.

2. A process for preparing the compound claimed in claim 1, comprising the following stages:

a) reacting 1,2-di-O-acetyl-glycerol with 2-chloro-4,5-dimethyl-2-oxo-1,3,-dioxaphosphate in the presence of an acid acceptor, in diethyl ether as solvent.

b) reacting the cyclic phosphate obtained in this manner with ethanolamine phthalimide in dichloroethane as solvent,

c) hydrolysing the product obtained in b) in 95% ethanol as solvent, in presence of hydrazine.

d) extracting with ether and purifying through a silica gel column with chloroform/methanol as eluent.

3. A process for preparing the compound of formula (I) as claimed in claim 2, characterised by reacting diacetin with 2-chloro-4,5-dimethyl-2-oxo-1,3-dioxophosphate in ether in the presence of triethylamine.

4. Pharmaceutically acceptable salts of the compound of formula (I).

5. A pharmaceutical composition for treating hyperlipoproteinemia and dyslipemia and as an adjuvant in cerebral arteriosclerosis, comprising a therapeutically effective quantity of the compound claimed in claim 1.

6. A pharmaceutical composition for treating hyperlipo proteinemia and dyslipemia and as an adjuvant in cerebral arteriosclerosis, comprising a therapeutically effective quantity of the compounds claimed in claim 4.

CLAIMS FOR THE CONTRACTING STATES: ES, GR

1. A process for preparing the compound O-(1,2-di-O-acetyl glycero-3-phosphoryl) ethanolamine of formula (I)

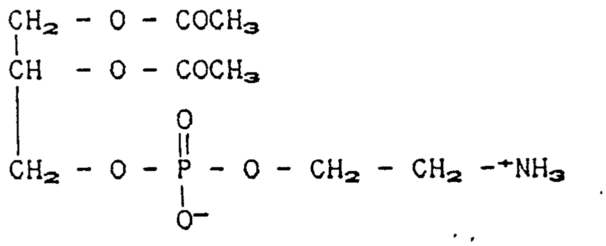

(I)

and its pharmacologically acceptable salts comprising the following stages:

a) reacting 1,2-di-O-acetyl-glycerol with 2-chloro-4,5-dimethyl-2-oxo-1,3,-dioxaphosphate in the presence of an acid acceptor, in diethyl ether as solvent.

b) reacting the cyclic phosphate obtained in this manner with ethanolamine phthalimide in dichloroethane as solvent,

c) hydrolysing the product obtained in b) in 95% ethanol as solvent, in presence of hydrazine.

d) extracting with ether and purifying through a silica gel column with chloroform/methanol as eluent.

2. A process for preparing the compound of formula (I) as claimed in claim 2, characterised by reacting diacetin with 2-chloro-4,5-dimethyl-2-oxo-1,3-dioxophosphate in ether in the presence of triethylamine.

European Patent Office

# EUROPEAN SEARCH REPORT

Application Number

EP 89 10 5461

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 186 803 (NEOPHARMED S.p.A.)<br>* Claims 1,17 *<br>--- | 1,4,5,6 | C 07 F 9/10<br>A 61 K 31/685 |
| A | US-A-4 725 588 (F.L. SNYDER)<br>* Claims *<br>----- | 1,4,5,6 | |
| | | | **TECHNICAL FIELDS SEARCHED (Int. Cl.4)** |
| | | | C 07 F 9/00<br>A 61 K 31/00 |

The present search report has been drawn up for all claims

| Place of search | Date of completion of the search | Examiner |
|---|---|---|
| THE HAGUE | 02-06-1989 | BESLIER L.M. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)